# FASCICULE DE BREVET EUROPEEN

(11) **EP 3 831 664 B1**
(45) Date de publication et mention de la délivrance du brevet: **15.06.2022**
(21) Numéro de dépôt: 20207080.1
(22) Date de dépôt: 12.11.2020
(51) Int. Cl.: B60R 16/023

(54) **VEHICULE AUTOMOBILE ÉQUIPÉ D'UN BOÎTIER DE FUSIBLES DISPOSÉ DANS UN COMPARTIMENT ARRIÈRE**
KRAFTFAHRZEUG MIT SICHERUNGSKASTEN, DER IN EINEM HINTEREN ABTEIL ANGEORDNET IST
MOTOR VEHICLE PROVIDED WITH A FUSEBOX ARRANGED IN A REAR COMPARTMENT

(30) Priorité: 02.12.2019 FR 1913585
(43) Date de publication de la demande: 09.06.2021
(73) Titulaire: PSA Automobiles SA, 78300 Poissy (FR)
(72) Inventeur: FORTUNE, Laurent, 78300 POISSY (FR); MICHEL, Thierry, 78110 LE VESINET (FR); LE FLOCH, Bertrand, 91140 VILLEBON SUR YVETTE (FR)

(56) Documents cités:
- EP-A1- 2 801 996
- FR-A1- 2 681 756
- FR-A1- 2 774 851
- FR-A1- 2 985 479
- US-A1- 2015 145 272
- US-A1- 2016 083 020
- US-A1- 2019 084 483

## Description

La présente invention revendique la priorité de la demande française N°1913585 déposée le 02.12.2019.

La présente invention concerne un véhicule automobile équipé d'un boîtier de fusible, ainsi qu'un procédé de changement de fusible dans ce type de véhicule.

Les véhicules automobiles comportent généralement un boîtier de fusibles, comprenant des séries de fusibles interposés entre une alimentation et des équipements électriques du réseau de bord, afin d'assurer une protection notamment en cas de court-circuit. Le boîtier de fusibles peut aussi comporter d'autres systèmes électriques comme des relais qu'il faut protéger.

Un type de boîtier de fusibles connu, présenté notamment par le document FR-A1-2681756, comporte une trappe disposée sur le plancher à côté des pédales, comprenant un couvercle présentant un angle adapté pour assurer de plus la fonction du repose-pied à gauche de ces pédales.

De cette manière on occupe un volume qui peut être disponible dans l'habitacle, pour alimenter en particulier des équipements électriques se trouvant à l'arrière du véhicule, comme les feux arrière. La trappe disposée au niveau du plancher permet un accès facile au boîtier pour des opérations de changement de fusibles, qui doivent pouvoir être exécutées de manière simple par toutes personnes.

D'une manière générale on dispose le boîtier de fusibles dans une zone protégée de l'humidité, pour préserver les contacts électriques et éviter des défaillances.

Toutefois pour certains véhicules électriques ou hybrides, comportant dans un compartiment à l'arrière du véhicule une batterie d'alimentation d'une machine électrique de traction, on peut disposer le boîtier de fusibles dans ce compartiment afin notamment de réduire la longueur des câbles électriques de liaison entre cette batterie et les fusibles.

Dans ce cas suivant les dispositions dans le compartiment arrière, l'accès au boîtier de fusibles peut être difficile ce qui rend délicat des opérations de changement de fusibles.

La présente invention a notamment pour but d'éviter ces problèmes de l'art antérieur.

Elle propose à cet effet un véhicule automobile équipé de boîtiers contenant des fusibles d'alimentation du réseau de bord, remarquable en ce qu'il comporte dans l'habitacle une plage arrière disposée entre des sièges et une lunette arrière du véhicule, cette plage comprenant une trappe équipée d'un couvercle recouvrant les boîtiers de fusibles disposés dans un compartiment arrière du véhicule, qui dans une position ouverte donne un accès aux fusibles.

Un avantage de ce véhicule est qu'on peut disposer les boîtiers de fusibles en partie supérieure du compartiment arrière, dans un environnement le plus protégé possible de l'humidité et des projections d'eau pour assurer leur longévité, tout en préservant un accès facile aux fusibles par la trappe formée sur la plage arrière de l'habitacle.

On réalise de manière économique un accès facile à des éléments techniques du véhicule, par la trappe de la plage arrière réalisable avec un faible coût, qui avec son couvercle fermé conserve une esthétique valorisante de l'intérieur du véhicule.

Le véhicule automobile selon l'invention peut comporter de plus une ou plusieurs des caractéristiques suivantes, qui peuvent être combinées entre elles.

En complément, le véhicule peut comporter un réservoir de lave-glace comprenant un bouchon de remplissage disposé sous la trappe, et accessible quand le couvercle est ouvert.

En particulier, le véhicule peut comporter deux boîtiers de fusibles formant des enveloppes identiques comprenant des montages de fusibles différents. Avantageusement, le couvercle présente une forme courbée qui s'inscrit globalement dans la forme de la plage arrière quand il est fermé.

Dans ce cas, avantageusement le couvercle comporte des verrous qui sont verrouillables par une rotation suivant une fraction de tour. Avantageusement, le couvercle comporte un marquage formé par un symbole représentant un fusible.

Avantageusement, le compartiment arrière comporte une batterie d'alimentation d'un moteur de traction du véhicule et un convertisseur de courant reliant cette batterie aux boîtiers de fusibles, qui sont disposés en dessous de ces boîtiers de fusibles.

Avantageusement, le compartiment arrière ne comporte aucun ouvrant donnant vers l'extérieur, l'accès à ses équipements intérieurs se faisant par le dessous du véhicule.

L'invention a aussi pour objet un procédé de changement de fusibles sur un véhicule comprenant l'une quelconque des caractéristiques précédentes, remarquable en ce qu'un opérateur se rendant dans l'habitacle à l'arrière du véhicule, ouvre le couvercle de la plage arrière, puis ouvre un boîtier de fusibles disposé sous le couvercle pour accéder aux fusibles disposés à l'intérieur de ce boîtier.

L'invention sera mieux comprise et d'autres caractéristiques et avantages apparaîtront plus clairement à la lecture de la description ci-après donnée à titre d'exemple, en référence aux dessins annexés dans lesquels :
[Fig. 1] est une vue de côté d'un véhicule selon l'invention ;
[Fig. 2] est une vue de dessus de la plage arrière de ce véhicule avec son couvercle fermé recouvrant les boîtiers de fusibles ; et
[Fig. 3] est une vue de la plage arrière avec son couvercle ouvert donnant un accès aux boîtiers de fusibles.

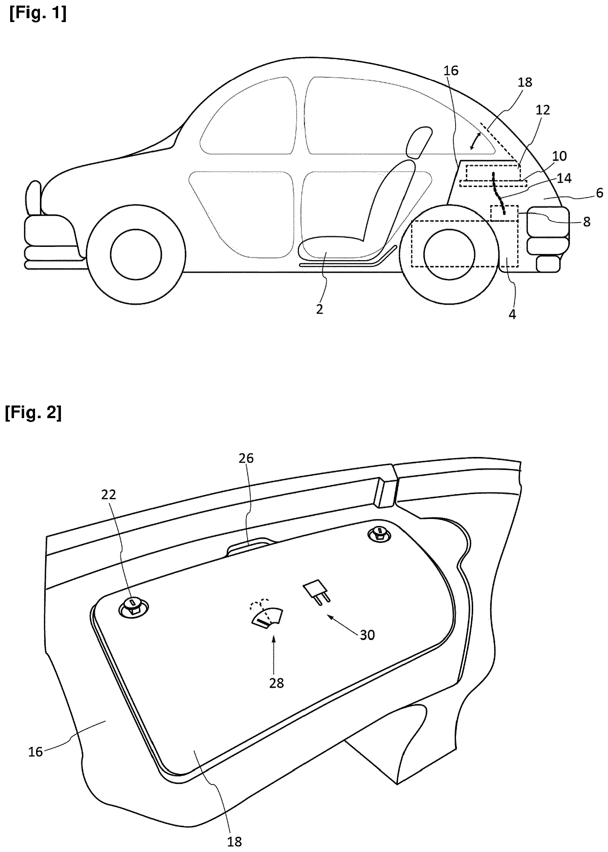

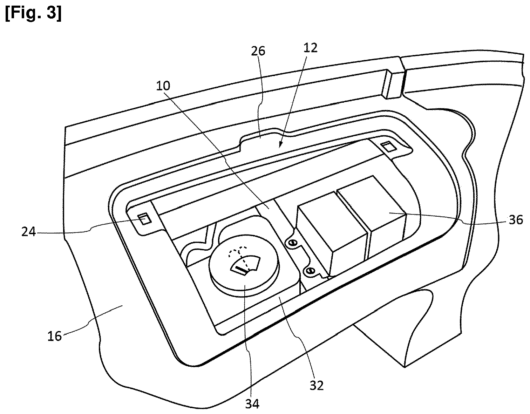

Les figures 1, 2 et 3 présentent un véhicule comportant un compartiment arrière 6 venant derrière une rangée de sièges 2, contenant une batterie 4 d'alimentation d'une machine électrique de traction de ce véhicule.

Pour des raisons de simplification du véhicule et de réduction des coûts, le compartiment arrière 6 ne comporte pas de couvercle à l'arrière du véhicule, les équipements disposés dans ce compartiment étant accessibles par le dessous du véhicule. En particulier le compartiment arrière 6 peut recevoir un câble électrique permettant le branchement d'un chargeur intégré dans le véhicule sur un réseau de distribution d'électricité extérieure, afin de recharger la batterie de traction 4.

Le compartiment arrière 6 comporte un convertisseur de courant continu/continu 8, qui transforme une autre tension de la batterie 4 nécessaire pour alimenter la machine électrique de traction, en une basse tension de 12V qui alimente le réseau de bord du véhicule.

Une traverse 10 fixée en partie supérieure du compartiment arrière, supporte des équipements 12 comprenant un réservoir de la glace 32, et des boîtiers de fusibles 36 disposés en entrée du réseau de bord, comportant des fusibles et des relais. Des câbles électriques 14 relient directement le convertisseur de courant 8 aux boîtiers de fusibles 36 disposés au-dessus. Cette disposition comprenant les boîtiers de fusibles 36 installés en partie supérieure du compartiment arrière 6, juste au-dessus de la batterie de traction 4, permet d'obtenir des câbles électriques 14 transmettant une certaine puissance qui sont courts, ce qui réduit les pertes d'énergie et diminue les coûts de ces câbles. De plus on obtient une meilleure protection contre l'humidité des systèmes électriques contenus dans les boîtiers de fusibles 36, grâce à cette position supérieure qui est moins exposée à l'humidité.

La plage arrière 16 formée par le moulage d'une matière plastique, présente une forme bombée dans la direction longitudinale du véhicule, descendant vers l'avant, qui ferme l'espace entre la lunette arrière du véhicule et la rangée de sièges 2.

La plage arrière 16 comporte une trappe fermée par un couvercle 18 formé par le moulage d'une matière plastique, présentant une forme bombée incrustée dans un léger creux de cette plage afin d'obtenir une surface globalement continue quand ce couvercle est fermé, qui suit le profil général de cette plage.

Le couvercle 18 comporte en partie inférieure des pattes s'engageant sur un bord inférieur de la trappe, et en partie supérieure deux verrous imperdables 22 qui s'engagent dans des perçages 24 de la planche pour se verrouiller ou se déverrouiller avec un mouvement d'un quart de tour facile à exécuter. Un creux supérieur 26 formé sur la plage arrière 16 juste au-dessus du couvercle 18, permet de glisser les doigts sous le bord supérieur de ce couvercle afin de le soulever quand les verrous 22 sont déverrouillés.

La traverse 10 fixée un peu en dessous de la plage arrière 16, reçoit en partie droite deux boîtiers de fusibles similaires 36 fixés à côté l'un de l'autre par des vis sur cette traverse, et en partie gauche un réservoir de liquide de lave-glace 32 alimentant un lave-glace du pare-brise, comportant sur le dessus un bouchon de remplissage 34.

Avantageusement on prévoit des boîtiers de fusibles 36 qui sont modulaires, permettant de réaliser différentes configurations de circuits électriques avec un nombre de fusibles varié, dépendant des équipements et des accessoires intégrés dans un même type de véhicule.

De cette manière après avoir ouvert le couvercle 18 comportant un marquage gravé formant un symbole du lave-glace 28 vers la gauche et un symbole d'un fusible 30 vers la droite, afin de signaler à un opérateur le positionnement de ces équipements, on obtient facilement un accès direct au bouchon de remplissage 34 du réservoir de lave-glace 32 et aux fusibles qui se trouvent juste en dessous du couvercle, pour faire des opérations de maintenance.

En particulier l'opérateur peut ouvrir les boîtiers de fusibles 36 pour contrôler ou changer des fusibles ou des relais.

L'opérateur a aussi accès au réservoir au bouchon de remplissage 34 pour effectuer des remplissages du réservoir 32 par l'intermédiaire de la trappe. Un éventuel débordement ou des coulées autour du bouchon 34 s'évacuent dans ce cas directement au travers du compartiment arrière 6 pour s'écouler sous le véhicule, sans risquer de faire couler le liquide dans l'habitacle du véhicule. De cette manière on évite l'introduction d'odeurs dans l'habitacle et préserve sa propreté.

L'intégration des équipements devant rester accessibles pour des opérations de maintenance, sous la plage arrière 16 comportant un simple couvercle 18 réalisé de manière économique, permet d'éviter l'installation dans l'habitacle de compartiments spécifiques pour ces équipements qui prendrait de la place et ajouterait des coûts supplémentaires, ou la réalisation d'une trappe sur l'extérieur de la carrosserie qui serait moins esthétique et plus chère.

## Revendications

1. Véhicule automobile équipé de boîtiers contenant des fusibles d'alimentation du réseau de bord (36), **caractérisé en ce qu'**il comporte dans l'habitacle une plage arrière (16) disposée entre des sièges (2) et une lunette arrière du véhicule, cette plage (16) comprenant une trappe équipée d'un couvercle (18) recouvrant les boîtiers de fusibles (36) disposés dans un compartiment arrière du véhicule (6), qui dans une position ouverte donne un accès aux fusibles.

2. Véhicule automobile selon la revendication 1, **caractérisé en ce qu'**il comporte une traverse (10) fixée en partie supérieure du compartiment arrière (6), en-dessous de la plage arrière (16), recevant les boîtiers de fusibles (36) qui sont posés dessus.

3. Véhicule automobile selon la revendication 1 ou 2, **caractérisé en ce qu'**il comporte un réservoir de lave-glace (32) comprenant un bouchon de remplissage (34) disposé sous la trappe, et accessible quand le couvercle (18) est ouvert.

4. Véhicule automobile selon l'une quelconque des revendications précédentes, **caractérisé en ce qu'**il comporte deux boîtiers de fusibles (36) formant des enveloppes identiques comprenant des montages de fusibles différents.

5. Véhicule automobile selon l'une quelconque des revendications précédentes, **caractérisé en ce que** le couvercle (18) présente une forme courbée qui s'inscrit globalement dans la forme de la plage arrière (16) quand il est fermé.

6. Véhicule automobile selon la revendication 5, **caractérisé en ce que** le couvercle (18) comporte des verrous (22) qui sont verrouillables par une rotation suivant une fraction de tour.

7. Véhicule automobile selon l'une quelconque des revendications précédentes, **caractérisé en ce que** le couvercle (18) comporte un marquage formé par un symbole représentant un fusible (30).

8. Véhicule automobile selon l'une quelconque des revendications précédentes, **caractérisé en ce que** le compartiment arrière (6) comporte une batterie d'alimentation d'un moteur de traction du véhicule (4) et un convertisseur de courant (8) reliant cette batterie (4) aux boîtiers de fusibles (36), qui sont disposés en dessous de ces boîtiers de fusibles (36).

9. Véhicule automobile selon l'une quelconque des revendications précédentes, **caractérisé en ce que** le compartiment arrière (6) ne comporte aucun ouvrant donnant vers l'extérieur, l'accès à ses équipements intérieurs se faisant par le dessous du véhicule.

10. Procédé de changement de fusibles sur un véhicule selon l'une quelconque des revendications précédentes, **caractérisé en ce qu'**un opérateur se rendant dans l'habitacle à l'arrière du véhicule, ouvre le couvercle (18) de la plage arrière (16), puis ouvre un boîtier de fusibles (36) disposé sous le couvercle (18) pour accéder aux fusibles disposés à l'intérieur de ce boîtier (36).

## Patentansprüche

1. Mit Sicherungskästen zur Versorgung des Bordnetzes (36) ausgestattetes Kraftfahrzeug , **dadurch gekennzeichnet, daß** es im Fahrgastraum eine zwischen den Sitzen (2) und einer Heckscheibe des Fahrzeugs angeordnete hintere Hutablage (16) aufweist, diese Herd (16), der eine Luke umfasst, die mit einer Abdeckung (18) ausgestattet ist, die die Sicherungskästen (36) abdeckt, die in einem hinteren Fach des Fahrzeugs (6) angeordnet sind, und die in einer offenen Position Zugang zu den Sicherungen gewährt.

2. Kraftfahrzeug nach Anspruch 1, **dadurch gekennzeichnet, dass** es einen Querträger (10) umfasst, der im oberen Teil des hinteren Fachs (6) unterhalb der Hutablage (16) befestigt ist und die darauf angeordneten Sicherungskästen (36) aufnimmt.

3. Kraftfahrzeug nach Anspruch 1 oder 2, **dadurch gekennzeichnet, daß** es einen Scheibenwaschbehälter (32) mit einem unter der Klappe angeordneten Einfülldeckel (34) aufweist, der bei geöffnetem Deckel (18) zugänglich ist.

4. Kraftfahrzeug nach einem der vorhergehenden Ansprüche, **dadurch gekennzeichnet, dass** es zwei Sicherungskästen (36) umfasst, die identische Umhüllungen bilden, die unterschiedliche Sicherungsanordnungen umfassen.

5. Kraftfahrzeug nach einem der vorhergehenden Ansprüche, **dadurch gekennzeichnet, daß** die Abdeckung (18) eine gewölbte Form aufweist, die sich im geschlossenen Zustand allgemein der Form der Heckablage (16) anpaßt.

6. Kraftfahrzeug nach Anspruch 5, **dadurch gekennzeichnet, daß** der Deckel (18) durch Drehung um einen Bruchteil einer Umdrehung arretierbare Riegel (22) aufweist.

7. Kraftfahrzeug nach einem der vorhergehenden Ansprüche, **dadurch gekennzeichnet, dass** die Abdeckung (18) eine Markierung aufweist, die durch ein Symbol gebildet ist, das eine Sicherung (30) darstellt.

8. Kraftfahrzeug nach einem der vorangehenden Ansprüche, **dadurch gekennzeichnet, dass** das hintere Fach (6) eine Batterie zur Versorgung eines Fahrmotors des Fahrzeugs (4) und einen diese Batterie (4) mit der Sicherung verbindenden Stromwandler (8) umfasst Sicherungskästen (36), die unterhalb dieser Sicherungskästen (36) angeordnet sind.

9. Kraftfahrzeug nach einem der vorangehenden Ansprüche, **dadurch gekennzeichnet, dass** der Heckraum (6) keine nach außen öffnende Öffnung aufweist, wobei der Zugang zu seiner Innenausstattung von der Unterseite des Fahrzeugs erfolgt.

10. Verfahren zum Wechseln von Sicherungen an einem Fahrzeug nach einem der vorhergehenden Ansprüche, **dadurch gekennzeichnet, dass** eine Bedienungsperson, die in den Fahrgastraum am Heck des Fahrzeugs einsteigt, die Abdeckung (18) der Heckablage (16) öffnet und dann öffnet einen Sicherungskasten (36), der unter der Abdeckung (18) angeordnet ist, um Zugang zu den innerhalb dieses Kastens (36) angeordneten Sicherungen zu erhalten.

## Claims

1. Motor vehicle equipped with boxes containing fuses for supplying the on-board network (36), **characterized in that** it comprises in the passenger compartment a rear parcel shelf (16) arranged between seats (2) and a rear window of the vehicle, this area (16) comprising a hatch equipped with a cover (18) covering the fuse boxes (36) arranged in a rear compartment of the vehicle (6), which in an open position gives access to the fuses.

2. Motor vehicle according to claim 1, **characterized in that** it comprises a crosspiece (10) fixed in the upper part of the rear compartment (6), below the rear shelf (16), receiving the fuse boxes (36) which are placed on it.

3. Motor vehicle according to claim 1 or 2, **characterized in that** it includes a windscreen washer reservoir (32) comprising a filler cap (34) placed under the hatch, and accessible when the lid (18) is open.

4. Motor vehicle according to any one of the preceding claims, **characterized in that** it comprises two fuse boxes (36) forming identical envelopes comprising different fuse assemblies.

5. Motor vehicle according to any one of the preceding claims, **characterized in that** the cover (18) has a curved shape which generally fits into the shape of the rear parcel shelf (16) when it is closed.

6. Motor vehicle according to claim 5, **characterized in that** the cover (18) comprises bolts (22) which can be locked by rotation through a fraction of a turn.

7. Motor vehicle according to any one of the preceding claims, **characterized in that** the cover (18) includes a marking formed by a symbol representing a fuse (30).

8. Motor vehicle according to any one of the preceding claims, **characterized in that** the rear compartment (6) comprises a battery for supplying a traction motor of the vehicle (4) and a current converter (8) connecting this battery (4) to the fuse boxes (36), which are arranged below these fuse boxes (36).

9. Motor vehicle according to any one of the preceding claims, **characterized in that** the rear compartment (6) does not include any opening opening outwards, access to its interior fittings taking place from underneath the vehicle.

10. Method of changing fuses on a vehicle according to any one of the preceding claims, **characterized in that** an operator going into the passenger compartment at the rear of the vehicle, opens the cover (18) of the rear parcel shelf (16), then opens a fuse box (36) arranged under the cover (18) to access the fuses arranged inside this box (36).
